# EUROPEAN PATENT APPLICATION

(11) **EP 2 713 581 A1**
(43) Date of publication of application: **02.04.2014**
(21) Application number: 13186288.0
(22) Date of filing: 27.09.2013
(51) Int. Cl.: H04L 29/06

(54) **Virtual honeypot**

(30) Priority: 28.09.2012 US 201213631398
(71) Applicant: Juniper Networks, Inc., Sunnyvale, CA 94089-1206 (US)
(72) Inventor: Burns, Bryan, Portland, OR Oregon 97212 (US); Cameron, Robert W., Mountain View, CA California 94043 (US); Ibatullin, Oskar, Sunnyvale, CA California 94089 (US); Quinlan, Daniel, Sunnyvale, CA California 94089 (US); Tavakoli, Oliver, Monte Sereno, CA California 95030 (US)
(74) Representative: Meldrum, David James

(57) **Abstract**

A virtual honeypot is configured within a security appliance by configuring one or more network addresses associated with the virtual honeypot. The security appliance receives network traffic destined for the virtual honeypot sent to the one or more network addresses associated with the virtual honeypot, and forwards the traffic to a remote honeypot such that the remote honeypot appears to be connected to a network local to the security appliance.

## Description

### FIELD

The present disclosure relates generally to computer network security, and more specifically to computer network honeypots.

### BACKGROUND

Computers are valuable tools in large part for their ability to communicate with other computer systems and exchange information over computer networks. Networks typically comprise an interconnected group of computers, linked by wire, fiber optic, radio, or other data transmission means, to provide the computers with the ability to transfer information from computer to computer. The Internet is perhaps the best-known computer network, and enables millions of people to access millions of other computers such as by viewing web pages, sending e-mail, or by performing other computer-to-computer communication.

Because the size of the Internet is so large and Internet users are so diverse in their interests, it is not uncommon for malicious users or pranksters to attempt to communicate with other users' computers in a manner that poses a danger to the other users. For example, a hacker may attempt to log in to a corporate computer to steal, delete, or change information. Computer viruses, worms, and/or Trojan horse programs may be distributed to other computers, or unknowingly downloaded or executed by computer users. Further, computer users within an enterprise may on occasion attempt to perform unauthorized network communications, such as running file sharing programs or transmitting secrets from within the enterprise network to the Internet.

For these reasons, network administrators may deploy within vulnerable networks a decoy computer system, or "honeypot," that is designed to attract the attention of intruders and to gather and report information regarding intrusions. That is, the honeypot is a server deployed within the enterprise network that simulates network services, such as database, application, and/or other services, with the express purpose of attracting malicious traffic to collect information respecting attack patterns and the source(s) of intrusions in order to identify infected network devices and suspected attackers.

### SUMMARY

In general, a virtual honeypot is exposed to a network using a security appliance that relays network traffic directed to the virtual honeypot from the security appliance to a server for processing. In some examples, a security appliance protecting an enterprise or other private network exposes an interface to the network. The security appliance maps the interface, which may include a network address exposed to the private network, to a tunnel terminated by a server (the "remote honeypot") that performs the functionality of a honeypot but that is external to the private network. The security appliance receives network traffic, which may include malicious traffic, at the exposed interface and forwards the network traffic on the mapped tunnel to the remote honeypot for processing. The remote honeypot processes the tunneled network traffic as if the remote honeypot were located within the private network to log, analyze, and in some cases respond with responsive network traffic, which the remote honeypot returns to the security appliance via the tunnel. Upon receiving responsive network traffic via the tunnel, the security appliance forwards (or "proxies") the responsive network traffic from the interface in order to emulate the presence of a honeypot on the private network.

In one example, a remote honeypot as described herein may be configured and continually maintained by a third-party provider without access to the private network. Forwarding malicious traffic to such a remote honeypot for processing using the described techniques may reduce the burden on the network administrators and operational costs expended in establishing and maintaining a honeypot in a dynamic networking environment. In another example, using a security appliance to establish a virtual honeypot and to proxy traffic destined for the virtual honeypot with a remote honeypot extends the range of the security appliance operation and may allow network administrators to leverage an existing network appliance to perform resource-intensive security operations (e.g., honeypot-related operations) in lieu of deploying yet another network appliance and its attendant capital and operational expenditure.

In another example, a security appliance configures an exposed network address that is associated with a remote honeypot that is located external to a protected network. The security appliance receives network traffic destined for the network address associated with the remote honeypot, and forwards the network traffic to the remote honeypot.

In another example, a security appliance comprises a security management module operable to prevent undesired network traffic in a protected network local to the security appliance. The security appliance also comprises a remote honeypot module operable to configure one or more exposed network addresses associated with a remote honeypot that is located external to the protected network. The security appliance also comprises a flow management module operable to receive network traffic destined for the network address associated with the remote honeypot, and to forward the network traffic destined for the network address associated with the remote honeypot to the remote honeypot, such that the remote honeypot appears to be connected to a network local to the security appliance.

In another example, a remote honeypot located external to a protected network receives network traffic from a security appliance that provides security services to the protected network, processes the received network traffic to generate responsive network traffic, and sends the responsive network traffic to the security appliance such that the remote honeypot appears to be located internal to the protected network.

In another example, a remote honeypot comprises a communication module operable to receive network traffic destined for a virtual honeypot from a security appliance. The remote honeypot further comprises a remote honeypot virtual machine operable to process the received network traffic, and to send network traffic to the security appliance, responsive to the received network traffic and via the communication module, such that the remote honeypot virtual machine appears to be connected to a network local to the security appliance.

The details of one or more examples of the present disclosure are set forth in the accompanying drawings and the description below. Other features, objects, and advantages will be apparent from the description and drawings, and from the claims.

### BRIEF DESCRIPTION OF THE FIGURES

Figure 1 is a block network diagram showing a virtual honeypot provided via a security appliance, in accordance with some example embodiments.

Figure 2 is a block diagram of a security appliance operable to provide a virtual remote honeypot, in accordance with some example embodiments.

Figure 3 is a block diagram illustrating a remote virtual honeypot operable to provide service to a security appliance, in accordance with some example embodiments.

Figure 4 is a flowchart of a method of operating a security appliance to provide a virtual honeypot using a remote honeypot server, in accordance with some example embodiments.

Figure 5 is a flowchart of a method operating a remote honeypot server to provide a virtual honeypot service to a security appliance, in accordance with some example embodiments.

Figure 6 is a block diagram of a router that integrates a security appliance operable to provide a virtual honeypot, in accordance with some example embodiments.

### DETAILED DESCRIPTION

Security systems, such as firewalls and antivirus software, provide significant protection in a typical network environment, in that firewalls provide defense against unauthorized access to a private network, and antivirus software provides defense against infection of individual computer systems by viruses, Trojans, rootkits, and other threats. Although such security systems provide defense against many types of computer attacks, even a careful examination of their event logs provides limited information regarding how an attack was mounted. Further, such technologies often miss many attacks and infections.

For reasons such as these, decoy systems known as honeypots are sometimes employed to gather information on an attacker or intruder. Honeypots can be set up inside or outside a private network, and are typically configured to appear as a vulnerable networked computer system, such as by using custom software configured to appear identical to a vulnerable system, or by using a standard operating system and software that may be an attractive target to an attacker, such as a Windows™ server, a database server, or other such system. The honeypot system further typically includes a software tool that enables user activity to be logged or traced, enabling the honeypot's host to gather information regarding an attacker's identity and methods.

But, configuration and installation of a honeypot system can be a complex task. It is desirable that the honeypot mimic an actual server that is attractive to an attacker, which involves installation, configuration, and maintenance of such a system, and possibly inclusion of "dummy" information such as emails, database entries, or other such false data. Tracking software is desirably set up to provide tracking of attacker activity on the honeypot system. Other configuration modifications, such as restricting outbound traffic to prevent the honeypot from being employed to attack other computer systems are also often desired, resulting in a somewhat complex installation. Further, cleaning up after a honeypot infection or attack to restore the honeypot to a pre-attack state can be a time-consuming task.

Some examples presented herein therefore provide a honeypot that is hosted remotely, and provided to a local network via a firewall or other security appliance. In one more detailed example, a security appliance uses a tunnel or virtual private network (VPN) connection to a remote honeypot system to provide a virtual honeypot that appears to be local to the security appliance. The remote honeypot may be configured by a third-party provider, such as using one of several standard configurations, reducing the burden on the security appliance operator in setting up and operating a honeypot.

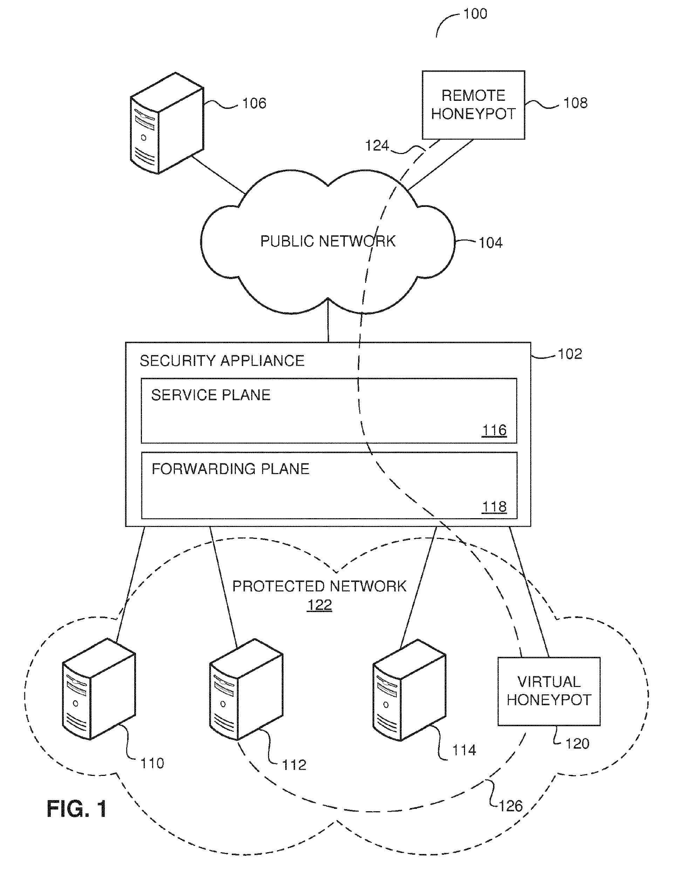

Figure 1 is a block network diagram showing a virtual remote honeypot provided via a security appliance, consistent with some example embodiments. In the example of Figure 1, a security appliance 102 operates within network 100, and is coupled via an external or public network 104 to one or more remote computers 106. The public network 104 further connects the security appliance 102 to a remote honeypot 108, which is operable to provide a virtual honeypot system to security appliance 102.

The security appliance 102 is also coupled to internal or private network systems, such as computers 110, 112, and 114. The security appliance includes a service plane 116 operable to configure and manage the security appliance, and a forwarding plane 118 operable to regulate the flow of traffic between the external network computers such as 106 and internal computer systems 110, 112, and 114. The security appliance provides for deploying a local virtual honeypot 120 by connecting to a remote honeypot 108 such that the security appliance and the remote honeypot are configured to emulate a local honeypot, appearing to computers coupled to the network as virtual honeypot 120.

Computers 110, 112, 114, and virtual honeypot 120 within the internal or private network are in this example part of a protected network 122, protected from public network 104 by the security appliance 102. The security appliance typically regulates or filters incoming network traffic from the public network to the protected network's computers, preventing unauthorized access, viruses, malware, and other such threats from reaching the protected network 122's computers.

In operation, the security appliance administrator configures the security appliance 102 to use a remotely hosted honeypot 108, such as a cloud-based honeypot, to simulate a locally operated honeypot system. The security appliance adds virtual endpoints, such as Internet Protocol (IP) addresses to the network, that respond to standard network discovery attempts such as Address Resolution Protocol (ARP) requests, Internet control message protocol (ICMP) pings, and other such network requests often used to find and communicate with systems on a network. The virtual honeypot 120 therefore appears to other systems such as remote computer 106 and local computers 110, 112, and 114 to be a system local to the security appliance's protected network. Security appliance 102 tunnels traffic from systems such as these destined to the virtual honeypot IP address to the remote honeypot 108, which is operable to provide a response that appears to come from a local virtual honeypot 120 via tunnel connection 124. The remote honeypot further monitors and tracks honeypot activity, and provides activity data such as activity reports to the security appliance 102's administrator so that the administrator can use the data to learn how attackers attempt to gain access to computer systems, and can gather forensic evidence to aid in the identification and prosecution of attackers. Further, honeypots may divert attacks from real infrastructure systems, effectively diverting dangerous activity away from sensitive networked assets.

The honeypot in various examples includes mail servers, database servers, or other systems that provide information or services that may be attractive to an attacker. Although some honeypots may include minimal resources, such as only those most likely to be accessed by an attacker, others will appear to be fully operational systems, using standard operating systems and other software, making them more difficult for an attacker to recognize as a potential honeypot.

Virtual honeypot 120 in various examples may be located on the internal or private network side of the security appliance 102 as shown at 120, or virtual honeypot 120 may be located on the external or public side of the firewall, such as is often the case with application or web servers and other such systems. In examples where security appliance 120 exposes virtual honeypot 120 inside the internal protected network, such as is shown in Figure 1, the virtual honeypot may also monitor for internal threats, such as virus or Trojan attacks from another computer on the private network such as computer 112 which is coupled to the virtual honeypot by network connection 126.

Because the virtual honeypot system should receive very little traffic on an internal network as it does not provide actual network services to typical users, a pattern of unusual traffic from an infected computer 112 to an internal virtual honeypot 120 may provide an indication of a security threat that is not identified by other means such as antivirus software, enabling the network administrator to more quickly find and respond to the threat. In addition, while described with respect to a security appliance, such as an intrusion detection and prevention, universal threat management, and/or firewall device, the techniques may be applied by other types of network devices, such as routers, layer three (L3) switches, and other devices capable of tunneling L3 traffic to remote honeypot 108.

Employing a remote honeypot to provide a virtual honeypot enables efficient use of remote server resources to provide virtual honeypots to several different security appliances, sharing server resources with other virtual honeypots that are rarely accessed by remote computers. Use of a remote or cloud-based honeypot service further offloads configuration and management of the honeypot from the local security appliance or another local machine to a remotely hosted system. The remotely hosted honeypot service provider can therefore provide several different standard base configurations from which a customer may choose, and which can serve as a base configuration for further customization if desired.

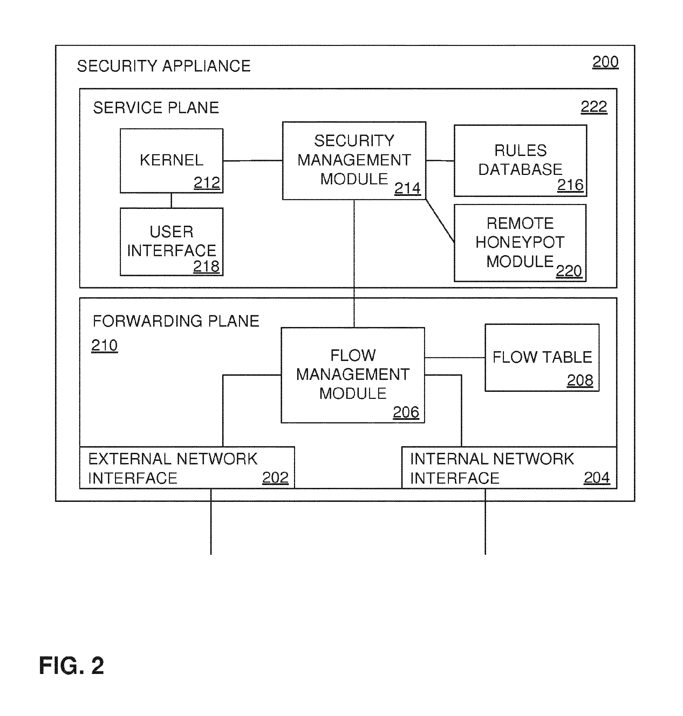

Figure 2 is a block diagram of a security appliance operable to provide a virtual honeypot, consistent with some example embodiments. Here, a security appliance 200 comprises an external network interface 202, an internal network interface 204, flow management module 205, and flow table 208 as part of a forwarding plane 210 that is operable to manage the flow of traffic through the security appliance. An operating system kernel 212, security management module 214, rules database 216, user interface 218, and honeypot module 220 are included in service plane 222, which is operable to manage the security appliance.

An administrator uses user interface 218 to access and configure the security management module 214, such as to update or configure rules in rule database 216, to apply various rules from rule database 216 to packet flows, to bind various applications to various ports, or to otherwise configure the operation of security appliance 200. The administrator may also configure the security appliance to utilize a remote honeypot service via remote honeypot module 220.

The forwarding plane 210 monitors traffic between the external network interface 202 and internal network interface 204 through flow management module 206, which uses rules from rule database 216, information regarding the configured network addresses of a virtual honeypot configured through remote honeypot module 220, and other such configuration information stored in flow table 208 to regulate the flow of network traffic through the security device. In some more detailed examples, flow management module 206 further provides some inspection of network packets, such as stateful inspection of packets based on the network connections associated with various packets, and is therefore operable to decode and monitor packets having various network protocols.

The various security appliance elements of Figure 2 in various examples may include any combination of hardware, firmware, and software for performing the various functions of each element. For example, kernel 212 and security management module 204 may comprise software instructions that run on a general-purpose processor, while flow management module 206 comprises an application-specific integrated circuit (ASIC). In another example, flow management module 206 executes as a process on a processor, along with security management module 214, kernel 212, and user interface 218. In still other embodiments, various elements of security appliance 200 may comprise discrete hardware units, such as digital signal processors (DSPs), application specific integrated circuits (ASICs), field programmable gate arrays (FPGAs), or any other equivalent integrated or discrete logic circuitry, or any other combination of hardware, firmware, and/or software.

In general, flow management module 206 determines, for packets received via input network interface 202, a packet flow to which the packets belong and characteristics of the packet flow. When a packet flow is first received, flow management module 206 constructs a state update including information regarding the packet such as the five-tuple {source IP address, destination IP address, source port, destination port, protocol}, and in some examples, an indication of how transactions are differentiated. Flow management module 206 receives inbound traffic through external network interface 202 and identifies network flows within the traffic. Each network flow represents a flow of packets in one direction within the network traffic and is identified by at least a source address, a destination address and a communication protocol. Flow management module 206 may utilize additional information to specify network flows, including source media access control (MAC) address, destination MAC address, source port, and destination port. Other examples may use other information to identify network flows, such as IP addresses.

Flow management module 206 maintains data within flow table 208 that describes each active packet flow present within the network traffic. Flow table 208 specifies network elements associated with each active packet flow, i.e., low-level information such as source and destination devices and ports associated with the packet flow. In addition, flow table 208 identifies pairs or groups of packet flows that collectively form a single communication session between a client and server. For example, flow table 208 may designate communication session as pairs of packet flows in opposite directions for flows sharing at least some common network addresses, ports and protocol.

The flow management module in a further example provides stateful inspection of packet flows to identify attacks within packet flows. When flow management module 206 detects an attack, it executes a programmed response, such as sending an alert to security management module 214 for logging or further analysis, dropping packets of the packet flow, or ending the network session corresponding to the packet flow. The flow management module may also block future connection requests originating from a network device having an identifier associated with a determined attack. In a further example, flow management module provides application-level inspection of packets, such as to allow HTTP traffic from web browsing while blocking HTTP traffic from file sharing applications.

The administrator may configure the security appliance to provide a virtual honeypot by configuring remote honeypot module 220 via user interface 218, such as by specifying a network address of the desired virtual honeypot or other characteristics of the virtual honeypot. Other characteristics may include specifying network services, e.g., ICMP, ARP, that the virtual honeypot is to support on the network. The remote honeypot module 220 creates a virtual honeypot having one or more network addresses local to the security appliance 200, and establishes a connection to a remote honeypot server such as 108 of Figure 1. The security appliance monitors the network for packets destined to network addresses with the virtual honeypot via flow management module 206 using rules configured in flow table 208, and forwards such traffic to the remote honeypot such as via a network tunnel connection or virtual private network (VPN) connection between the security appliance 200 and the remote honeypot.

The security appliance is therefore operable to make it appear to other networked computer systems that the virtual honeypot is an actual server that is local to the security appliance 200, making it an attractive target for attackers. Although the virtual honeypot is shown in Figure 1 at 120 to be a single virtual system, in other examples it may be a network segment or subnet, or an elaborate virtual network environment configured to attract the attention of attackers.

The security appliance in the example of Figure 2 in many examples may lack the processing power, storage, or other computing resources to execute a honeypot with the security appliance. Security appliance 200, as described above, therefore relies upon a remotely hosted honeypot. The security appliance 200 uses the remote honeypot module 220 to configure network addresses to make it appear as though the remote honeypot exists locally on a network protected by security appliance 200. In some examples, however, security appliance 200 does not provide a full range of network connectivity for the virtual honeypot. Although security appliances such as 200 are often configured to restrict traffic inbound to local systems, the security appliance in this example may be configured to restrict traffic outbound from the virtual honeypot, preventing it from being taken over in an attempt to distribute malware, spam, or other security threats. In another example, management software running on the virtual honeypot works to prevent outbound network traffic that may pose a threat to other computer systems. Such network traffic blocking mechanisms in a more detailed example are configured to make it appear as though network traffic can be successfully sent from the honeypot system, thereby making it appear to be a fully operational network system.

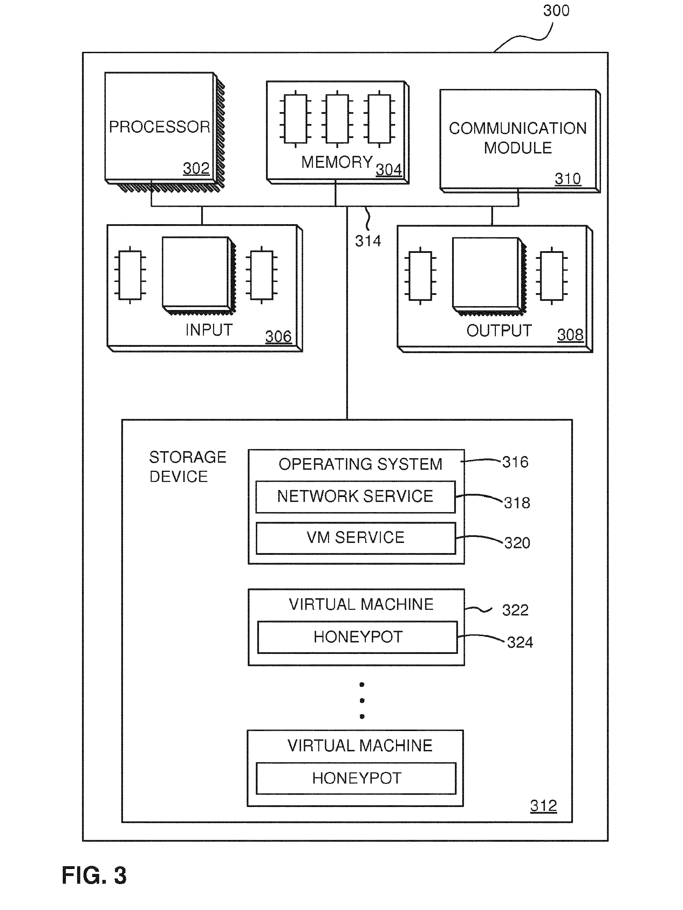

Figure 3 shows a block diagram of a computerized system as may be used to provide a remote honeypot, consistent with an example embodiment. Figure 3 illustrates only one particular example of computing device 300, and many other examples of computing device 300 may be used in other embodiments, such as to provide a remote virtual honeypot or security appliance consistent with various example embodiments.

As shown in the specific example of Figure 3, computing device 300 includes one or more processors 302, memory 304, one or more input devices 306, one or more output devices 308, one or more communication modules 310, and one or more storage devices 312. Computing device 300, in one example, further includes an operating system 316 executable by computing device 300. The operating system includes in various examples services such as a network service 318 and a virtual machine (VM) service 320. One or more virtual machines, such as virtual machine 322 are also stored on storage device 312, and are executable by computing device 300. Each of the virtual machines such as 322 may further execute a honeypot server 324. Each of components 302, 304, 306, 308, 310, and 312 may be interconnected (physically, communicatively, and/or operatively) for inter-component communications, such as via one or more communications channels 314. In some examples, communication channels 314 include a system bus, network connection, interprocess communication data structure, or any other channel for communicating data. Applications such as virtual machine 322 and operating system 316 may also communicate information with one another as well as with other components in computing device 300.

Processors 302, in one example, are configured to implement functionality and/or process instructions for execution within computing device 300. For example, processors 302 may be capable of processing instructions stored in storage device 312 or memory 304. Examples of processors 302 may include, any one or more of a microprocessor, a controller, a digital signal processor (DSP), an application specific integrated circuit (ASIC), a field-programmable gate array (FPGA), or equivalent discrete or integrated logic circuitry.

One or more storage devices 312 may be configured to store information within computing device 300 during operation. Storage device 312, in some examples, is described as a computer-readable storage medium. In some examples, storage device 312 is a temporary memory, meaning that a primary purpose of storage device 312 is not long-term storage. Storage device 312, in some examples, is described as a volatile memory, meaning that storage device 312 does not maintain stored contents when the computer is turned off. In other examples, data is loaded from storage device 312 into memory 304 during operation. Examples of volatile memories include random access memories (RAM), dynamic random access memories (DRAM), static random access memories (SRAM), and other forms of volatile memories known in the art. In some examples, storage device 312 is used to store program instructions for execution by processors 302. Storage device 312 and memory 304, in various examples, are used by software or applications running on computing device 300 (e.g., virtual machines 322) to temporarily store information during program execution.

Storage devices 312, in some examples, also include one or more computer-readable storage media. Storage devices 312 may be configured to store larger amounts of information than volatile memory. Storage devices 312 may further be configured for long-term storage of information. In some examples, storage devices 312 include non-volatile storage elements. Examples of such non-volatile storage elements include magnetic hard discs, optical discs, floppy discs, flash memories, or forms of electrically programmable memories (EPROM) or electrically erasable and programmable (EEPROM) memories.

Computing device 300, in some examples, also includes one or more communication units 310. Computing device 300, in one example, utilizes communication unit 310 to communicate with external devices via one or more networks, such as one or more wireless networks. Communication unit 310 may be a network interface card, such as an Ethernet card, an optical transceiver, a radio frequency transceiver, or any other type of device that can send and/or receive information. Other examples of such network interfaces may include Bluetooth, 3G and WiFi radios computing devices as well as Universal Serial Bus (USB). In some examples, computing device 300 utilizes communication unit 310 to communicate with an external device such as security appliance 102 of Figure 1, or any other computing device.

Computing device 300, in one example, also includes one or more input devices 306. Input device 306, in some examples, is configured to receive input from a user through tactile, audio, or video feedback. Examples of input device 306 include a touchscreen display, a mouse, a keyboard, a voice responsive system, video camera, microphone or any other type of device for detecting input from a user.

One or more output devices 308 may also be included in computing device 300. Output device 308, in some examples, is configured to provide output to a user using tactile, audio, or video stimuli. Output device 308, in one example, includes a presence-sensitive touchscreen display, a sound card, a video graphics adapter card, or any other type of device for converting a signal into an appropriate form understandable to humans or machines. Additional examples of output device 308 include a speaker, a light-emitting diode (LED) display, a liquid crystal display (LCD), or any other type of device that can generate output to a user. In some examples, input device 306 and/or output device 308 are used to provide operating system services, such as graphical user interface service 318, such as via a display.

Computing device 300 may include operating system 316. Operating system 316, in some examples, controls the operation of components of computing device 300, and provides an interface from various applications such as virtual machine 322 to components of computing device 300. For example, operating system 316, in one example, facilitates the communication of virtual machine 322 with processors 302, communication unit 310, storage device 312, input device 306, and output device 308. As shown in Figure 3, virtual machine 322 may include a honeypot 324 executing thereon, as shown at 108 in Figure 1. Applications such as 322 may each include program instructions and/or data that are executable by computing device 300. As one example, virtual machine 322 and honeypot 324 include instructions that cause computing device 300 to perform one or more of the operations and actions described herein.

A variety of different honeypots 324 may be configured to run on a single server, or distributed across different servers in various examples. This is achieved in some examples by executing different virtual machines 322 on a server, and executing a different instance of a honeypot in each virtual machine. This enables a remote honeypot server to provide a variety of different virtual honeypots, and to add or remove different virtual honeypots as needed, to support a variety of different enterprise customer requirements.

Although computing device 300 is in this example a remote honeypot server, in other examples it may perform other functions described herein, such as executing the service plane and forwarding plane of a security appliance as shown and described in Figure 2.

The methods described herein may be implemented, at least in part, in hardware, software, firmware, or any combination thereof. For example, the described methods may be implemented within one or more processors, including one or more microprocessors, digital signal processors (DSPs), application specific integrated circuits (ASICs), field programmable gate arrays (FPGAs), or any other equivalent integrated or discrete logic circuitry, as well as any combinations of such components. The term "processor" or "processing circuitry" may generally refer to any of the foregoing logic circuitry, alone or in combination with other logic circuitry, or any other equivalent circuitry. A control unit including hardware may also perform one or more of the methods described herein.

Such hardware, software, and firmware may be implemented within the same device or within separate devices to support the various methods described herein. In addition, any of the described units, modules or components may be implemented together or separately as discrete but interoperable logic devices. Depiction of different features as modules or units is intended to highlight different functionality and does not necessarily imply that such modules or units must be realized by separate hardware, firmware, or software components. Rather, functionality associated with one or more modules or units may be performed by separate hardware, firmware, or software components, or integrated within common or separate hardware, firmware, or software components.

The methods described herein may also be embodied or encoded in an article of manufacture including a computer-readable storage medium encoded with instructions. Instructions embedded or encoded in an article of manufacture including a computer-readable storage medium encoded, may cause one or more programmable processors, or other processors, to implement one or more of the techniques described herein, such as when instructions included or encoded in the computer-readable storage medium are executed by the one or more processors. Computer readable storage media may include random access memory (RAM), read only memory (ROM), programmable read only memory (PROM), erasable programmable read only memory (EPROM), electronically erasable programmable read only memory (EEPROM), flash memory, a hard disk, a compact disc ROM (CD-ROM), a floppy disk, a cassette, magnetic media, optical media, or other computer readable media. In some examples, an article of manufacture may include one or more computer-readable storage media.

In some examples, a computer-readable storage medium may include a non-transitory medium. The term "non-transitory" may indicate that the storage medium is not embodied in a carrier wave or a propagated signal. In certain examples, a non-transitory storage medium may store data that can, over time, change (e.g., in memory or nonvolatile memory).

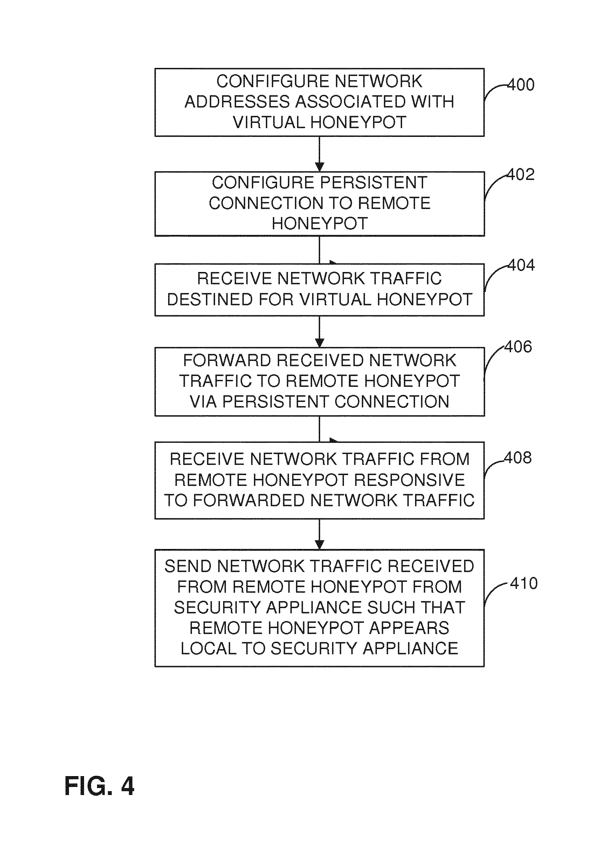

Figure 4 is a flowchart of a method of operating a security appliance to provide a virtual honeypot using a remote honeypot server, consistent with an example embodiment. One or more network addresses for the virtual honeypot are configured at 400, such as one or more Internet protocol (IP) or media access control (MAC) addresses, which are addresses on a network local to the security appliance. In further examples, the addresses are within a private or internal network coupled to the security appliance, or are on a public or external network coupled to the security appliance.

The security appliance establishes a communication session to a remote honeypot server 402, such as a remotely-hosted honeypot server, a cloud-based honeypot service, or another type of remote honeypot system. The security appliance receives network traffic destined for the virtual honeypot at 404, such as by monitoring the network for traffic destined to the network addresses configured to be associated with the virtual honeypot at 400. The traffic in a further example comes from a potential attacking computer system, such as a remote client system as shown at 106 of Figure 1, or a local system that may be infected with malware or otherwise used to mount an attack as shown at 112 and 124 of Figure 1. The security appliance forwards received network traffic destined for the virtual honeypot to the remote honeypot at 406, via the communication session between the security appliance and the remote honeypot created at 402. The communications session in various examples is a network tunnel, a virtual private network, or another such network connection.

The remote honeypot receives the network traffic from the security appliance and sends network traffic in response, which the security appliance receives at 408. For example, the remote honeypot operating at least in part to expose an email server may return email account information in response to an email query, the remote honeypot operating at least in part to expose a database server may return database information in response to a database query, or the remote honeypot may enable a user to log on and explore configuration, logs, and applications that may be found in a typical network environment by responding to user interface commands or other commands received through the security appliance.

The security appliance forwards the responsive traffic received from the remote honeypot at 410, such as to a potential attacking computer system, using the network address associated with the virtual honeypot such that the remote honeypot appears to be a computer system local to the security appliance. That is, the security appliance proxies the traffic received from the remote honeypot with the virtual honeypot interface (e.g., network address) exposed by the security appliance to the network in order to emulate a honeypot existing within the network secured by the security appliance. An attacker therefore sees the virtual honeypot provided by the security appliance as simply another server on the network, and is unaware that the server is a virtual honeypot provided by a remote honeypot server via the security appliance.

In further embodiments, the security appliance is operable to perform other functions, such as send configuration settings to the remote honeypot, receive report information from the remote honeypot, and select one or more types of honeypot servers available for configuration.

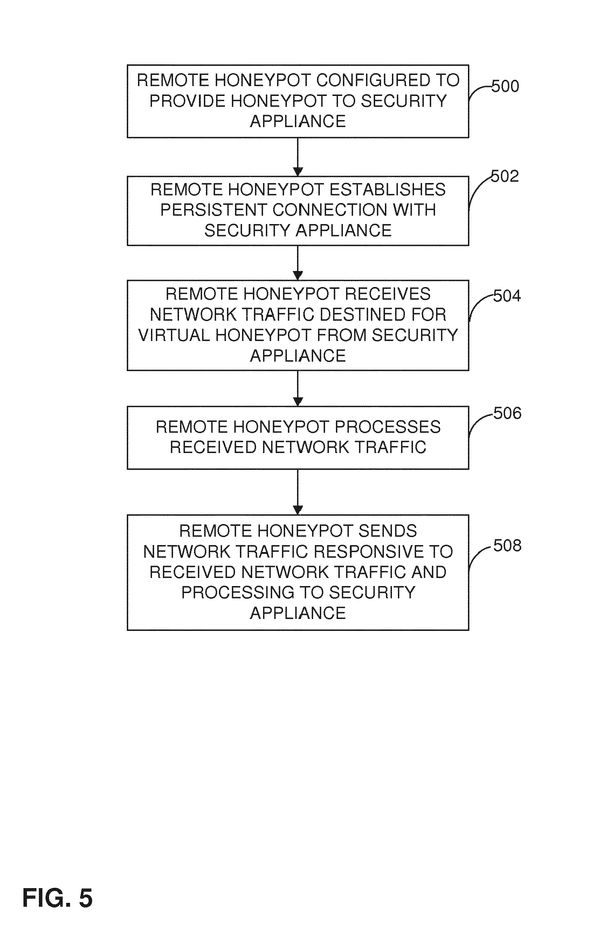

Figure 5 is a flowchart of a method operating a remote honeypot server to provide a virtual honeypot service to a security appliance, consistent with an example embodiment. A remote honeypot is configured to provide a honeypot to a security appliance at 500, such as by receiving a configuration request from the security appliance, receiving a subscription or payment for a honeypot service that is associated with the security appliance or security appliance administrator, or otherwise receiving an indication that a honeypot is desired to be linked to the security appliance.

A persistent network connection is established between the remote honeypot and the security appliance at 502, such as a tunnel or virtual private network connection between the security appliance and a virtual machine executing the remote honeypot. The remote honeypot receives network traffic destined for a virtual honeypot hosted by the security appliance at 504, such as by the security appliance receiving traffic destined to a network address or service provided by the virtual honeypot hosted by the security appliance, and forwarding the received traffic to the remote honeypot.

The remote honeypot processes the received network traffic at 506, such as by providing an interactive server through a graphical or command line user interface, providing network services such as NetBIOS, Internet Control Message Protocol (ICMP) ping, address resolution protocol (ARP) request, MAC address, Internet Protocol address, or Windows workgroup services, or providing server functions such as an email server, a database server, a file server, a web server, or Windows server.

The remote honeypot then sends network traffic to the security appliance responsive to the received traffic at 508 over the persistent connection, such as sending the results of a service query, a user interface input, or other server response to the received network traffic. The responsive network traffic is formatted such that the security appliance is operable to receive the traffic from the remote honeypot, and provide the traffic to a potential attacker or other system attempting to access the virtual honeypot hosted via the security appliance.

This enables the security appliance and the remote honeypot to work together to provide a virtual honeypot that appears to be connected to a network local to the security appliance, to detect and track attempts to access various resources or services provided via the honeypot system. The security appliance is operable to provide a virtual honeypot by capturing traffic to and from network addresses, resource names, or other identifiers associated with the virtual honeypot, and exchanging information with a remote honeypot server so it appears that a honeypot server is operating local to the security appliance.

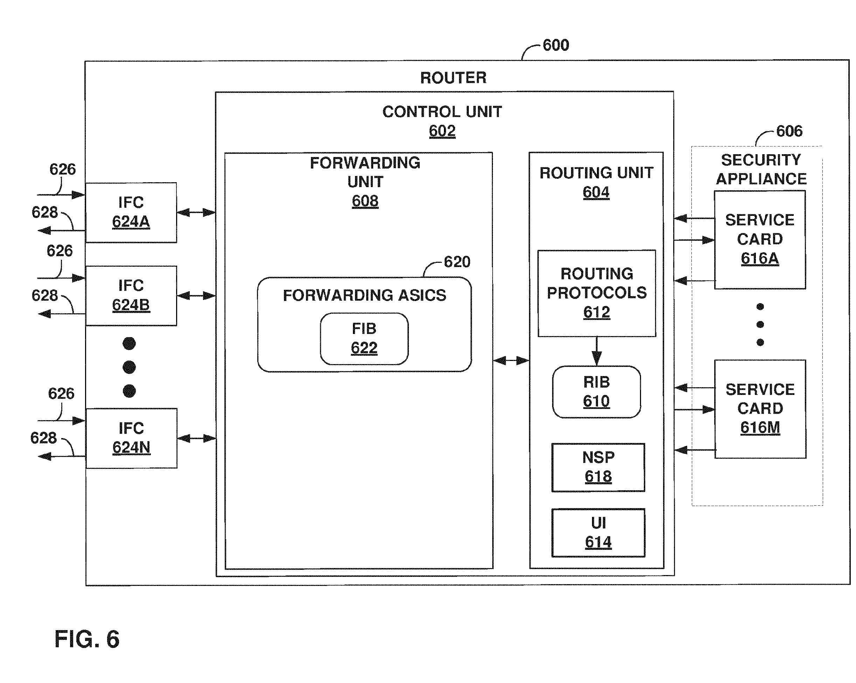

Figure 6 is a block diagram of a router that integrates a security appliance operable to provide a virtual honeypot, in accordance with some example embodiments. Here, an example router 600 comprises a control unit 602 that includes a routing unit 604, a security appliance, 606, and a forwarding unit 608. Routing unit 604 is primarily responsible for maintaining routing information base (RIB) 610 to reflect the current topology of a network and other network entities to which it is connected. In particular, routing unit 604 periodically updates RIB 610 to accurately reflect the topology of the network and other entities. Routing engine 604 also includes routing protocols 612 that perform routing operations, including protocols for establishing tunnels, such as VPNs and optionally LSPs, through a network.

UI module 614 represents software executing on routing unit 604 that presents a command line interface (e.g., via a shell or Telnet session) for receiving configuration data as described herein, including configuration data defining one or more interfaces for a virtual honeypot presented by router 600 to a network and for application by service cards 616 of security appliance 606. Network services process (NSP) 618 of routing unit 604 communicates with and programs service cards 616A-616M of security appliance 606.

In accordance with RIB 610, forwarding application specific integrated circuits (ASICs) 620 of forwarding unit 608 maintain forwarding information base (FIB) 622 that associates network destinations or MPLS labels with specific next hops and corresponding interface ports. For example, control unit 602 analyzes RIB 610 and generates FIB 622 in accordance with RIB 610. Router 600 includes interface cards 624A-624N ("IFCs 624") that receive and send packets via network links 626 and 628, respectively. IFCs 624 may be coupled to network links 626, 628 via a number of interface ports.

In some examples, routing unit 604 in accordance with commands received by UI 614 programs FIB 622 to include a forwarding next hop for the virtual honeypot interfaces. In addition, routing unit 604 programs service card 616A, which may represent a tunnel PIC, to proxy virtual honeypot traffic with a remote honeypot. Forwarding ASICs 620 apply FIB 622 to direct traffic that is received by IFCs 624 and destined virtual honeypot interfaces to service card 616A, which tunnels the traffic to the remote honeypot. Service card 616A receives responsive traffic and forwards the responsive traffic to forwarding unit 608 for output via IFCs 624. In this way, router 600 may provide high-performance honeypot emulation in conjunction with the remote honeypot. In some examples, routing unit 604 programs FIB 622 to include a tunneling interface, e.g., a VPN interface, for virtual honeypot traffic. Consequently, forwarding ASICs 620 apply FIB 622 to directly tunnel virtual honeypot traffic to the remote honeypot.

In one embodiment, each of forwarding unit 608 and routing unit 604 may comprise one or more dedicated processors, hardware, ASICs or the like, and may be communicatively coupled by a data communication channel. The data communication channel may be a highspeed network connection, bus, shared-memory or other data communication mechanism. Router 600 may further include a chassis (not shown) for housing control unit 602. The chassis has a number of slots (not shown) for receiving a set of cards, including IFCs 624 and service cards 616. Each card may be inserted into a corresponding slot of the chassis for electrically coupling the card to control unit 602 via a bus, backplane, or other electrical communication mechanism.

Router 600 may operate according to program code having executable instructions fetched from a computer-readable storage medium (not shown). Examples of such media include random access memory (RAM), read-only memory (ROM), non-volatile random access memory (NVRAM), electrically erasable programmable read-only memory (EEPROM), flash memory, and the like. The functions of router 600 may be implemented by executing the instructions of the computer-readable storage medium with one or more processors, discrete hardware circuitry, firmware, software executing on a programmable processor, or a combination of any of the above.

It will therefore be understood that in some examples, a virtual honeypot is configured within a security appliance by configuring one or more network addresses associated with the virtual honeypot. The security appliance receives network traffic destined for the virtual honeypot sent to the one or more network addresses associated with the virtual honeypot, and forwards the traffic to a remote honeypot such that the remote honeypot appears to be connected to a network local to the security appliance

The example embodiments presented here illustrate how a virtual honeypot is provided via a security appliance and a remote honeypot such that the virtual honeypot appears to be local to a network connected to the security appliance. Although specific embodiments have been illustrated and described herein, it will be appreciated by those of ordinary skill in the art that any arrangement that achieve the same purpose, structure, or function may be substituted for the specific embodiments shown. This application is intended to cover any adaptations or variations of the embodiments of the present teachings described herein. It is intended that this invention be limited only by the claims, and the full scope of equivalents thereof.

## Claims

1. A method, comprising:
configuring an exposed network address in a security appliance, the network address associated with a remote honeypot that is located external to a protected network;
receiving network traffic destined for the network address associated with the remote honeypot; and
forwarding the network traffic to the remote honeypot.

2. The method of claim 1, further comprising:
receiving a response from the remote honeypot; and
forwarding the response to a computing device that originated the received and forwarded network traffic, such that the remote honeypot appears to be connected to a network local to the security appliance.

3. The method of claim 1 or 2, wherein the configured and exposed network address with the remote honeypot comprises one of a private network address of the protected network or a public network address exposed to a public network.

4. The method of claim 1, 2 or 3, further comprising:
configuring one or more network services in the remote honeypot via the security appliance; and
configuring the remote honeypot to provide one or more server services.

5. The method of claim 4,
wherein the one or more network services comprising one or more of NetBIOS, Internet Control Message Protocol, address resolution protocol (ARP), and Windows workgroup services; and
wherein the one or more server services comprise one or more of an email server, a database server, a file server, a web server, and Windows server.

6. The method of any of claims 1-5, further comprising receiving in the security appliance an activity report from the remote honeypot, wherein the activity report lists activity data with respect to the remote honeypot in association with the network traffic directed to the remote honeypot by the security appliance.

7. The method of any of claims 1-6, further comprising establishing a persistent tunnel between the security appliance and the remote honeypot for configuring the remote honeypot by the security appliance.

8. The method of any of claims 1-7, further comprising:
deploying a virtual honeypot at the protected network to emulate a local honeypot; and
forwarding traffic from the security appliance to the remote honeypot such that the remote honeypot appears, to computers attempting to access the protected network, to be a honeypot connected locally to the security appliance.

9. The method of any preceding claim, further comprising:
receiving, in the remote honeypot located external to the protected network, network traffic from a plurality of security appliances that each provide security services to a plurality of different protected networks;
processing the received network traffic from each of the different security appliances with a different, corresponding one of a plurality of virtual machines executing within the remote honeypot to generate corresponding responsive network traffic for the different protected networks; and
sending the responsive network traffic from the remote honeypot to the corresponding security appliances such that the remote honeypot appears to be located internal to each the protected networks.

10. A security appliance, comprising:
a security management module operable to prevent undesired network traffic in a protected network local to the security appliance;
a remote honeypot module operable to configure one or more exposed network addresses associated with a remote honeypot that is located external to the protected network; and
a flow management module operable to receive network traffic destined for the network address associated with the remote honeypot, and to forward the network traffic destined for the network address associated with the remote honeypot to the remote honeypot, such that the remote honeypot appears to be connected to a network local to the security appliance.

11. The security appliance of claim 10, further comprising means for performing any of the methods of claims 1-9.

12. A remote honeypot, comprising:
a communication module operable to receive network traffic destined for a virtual honeypot from a security appliance;
a remote honeypot virtual machine operable to process the received network traffic, and to send network traffic to the security appliance, responsive to the received network traffic and via the communication module, such that the remote honeypot virtual machine appears to be connected to a network local to the security appliance.

13. The remote honeypot of claim 12, further comprising means communicating with a security appliance having means for performing any of the methods of claims 1-8.

14. The remote honeypot of claim 12 or 13,
wherein the communication module is further operable to establish a connection between the security appliance and the remote honeypot to receive one or more configuration settings for the virtual honeypot from the security appliance,
wherein the remote honeypot virtual machine further operable to provide one or more network services or server services, and
the remote honeypot virtual machine is operable to send an activity report to the security appliance.

15. The remote honeypot of any of claims 12-14, further comprising:
two or more remote honeypot virtual machines, each of the two or more remote honeypot virtual machines supporting a different security appliance for a different protected network,
wherein each of the two or more remote honeypot virtual machines is separately configurable by a network administrator for the respective supported protected network.
